# EUROPÄISCHE PATENTANMELDUNG

(11) **EP 1 233 384 A2**
(43) Veröffentlichungstag der Anmeldung: **21.08.2002**
(21) Anmeldenummer: 02100100.3
(22) Anmeldetag: 01.02.2002
(51) Int. Cl.: G07F 19/00, H04M 17/00

(54) **Verfahren für Micro-Payment im Zahlungsverkehr über Mobilfunk- oder Datennetze und Vorrichtung zur Durchführung des Verfahrens**

(30) Priorität: 15.02.2001 DE 10107131
(71) Anmelder: SIEMENS AKTIENGESELLSCHAFT, 80333 München (DE)
(72) Erfinder: Vindeby, Per, 81739, München (DE)

(57) **Zusammenfassung**

Das Problem bei"E-Diensten" ist, daß regelmäßig wiederkehrend kleine Summen von Gebühren (beispielsweise alle 10 Sekunden 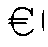 0.10) abgebucht werden, und der Benutzer möchte nicht jeden Zahlungsvorgang bestätigen oder gar authorisieren (beispielsweise durch Eingabe einer PIN).

Andererseits möchte der Benutzer weiterhin über seine Ausgaben die Kontrolle behalten.

Bei dem erfindungsgemäßen Verfahren hat der Benutzer die Möglichkeit, sowohl die "Grundgebühr" zu akzeptieren und gleichzeitig einen höheren Betrag für diesen Dienst zu reservieren. Beispielsweise kann der Benuzter eine Zahlung von bis zu 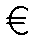 2,00 akzeptieren, obwohl der Dienst zunächst nur eine Gebühr von 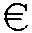 0.10 anfordert.

## Beschreibung

### Fachgebiet der Erfindung

Der Zahlungsverkehr basiert typischerweise auf einzelnen Zahlungsaufforderungen (beispielsweise beim Einkaufen) oder wiederholten Zahlungsaufforderungen (beispielsweise Telefonanrufe).
In letzter Zeit wird die E- (Electronic) und M- (Mobile) Commerce Umgebung, also das Kaufen via PC über das Internet oder über ein Mobiles Endgerät und das Mobilfunknetz immer wichtiger. Für Dienste wie Spiele, Information, Videos oder Musik werden Gebühren berechnet, üblicherweise benutzungsorientiert, zeitorientiert oder volumenorientiert (beispielsweise die Menge von Bytes). Solche Dienste kosten oftmals nur einen sehr kleinen Geldbetrag (oftmals weniger als 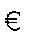 1.00), dieses bezeichnet man auch als "Micro-Payment".

So ist das Problem bei solchen "E-Diensten", daß wiederkehrend kleine Summen von Gebühren (beispielsweise alle 10 Sekunden 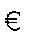 0.10) abgebucht werden, und der Benutzer möchte nun nicht jeden Zahlungsvorgang bestätigen oder gar authorisieren (beispielsweise durch Eingabe einer PIN).
Andererseits möchte der Benutzer weiterhin über seine Ausgaben die Kontrolle behalten. Dies ist insbesondere bei komplexeren Zahlungs-Szenarios wichtig, beispielsweise wenn die Vergebührung eines Dienstes in einer Kombination aus Zeit und Volumen geschieht.
Weiterhin kann es sein, daß der Benutzer dem Diensteanbeiter nicht vertraut, weil er diesen nicht gut genug kennt. Der Diensteanbieter wird oftmals unabhängig sein vom Zahlungsdienst-Anbieter des Benutzers. In diesem Fall ist es vorteilhaft, wenn der Benutzer die Höhe des Zahlungbetrages die der Zahlungsdienst-Anbieter an den Dienstanbieter von seinem Konto abziehen kann, begrenzen kann.

### Stand der Technik

In den aktuellen Lösungen mit kontinuierlicher Berechnung für Micro-Payment wird nicht jeder Zahlungsvorgang vom Benutzer bestätigt. Ein bekannter Dienst für regelmäßige Gebührenberechnung ist der Telefondienst, für den der Benutzer abhängig von Zeitdauer und Entfernung vergebührt wird, beispielsweise 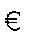 0.30 in der Minute. So entscheidet der Benutzer aufgrund der Gebühr durch die Länge der Verbindung die Höhe der Kosten. Obwohl die Tarifmodelle der Telefonanbieter immer komplexer werden (beispielsweise einen Rabatt nach einer Telefondauer von über 10 Minuten), ist es für den Benutzer immer noch relativ einfach, seine Ausgaben zu kalkulieren. Zusätzlich ist das Vertrauen der Benutzer zu seinem Dienstanbieter in diesem Fall sehr hoch, er vertraut darauf, nicht mehr berechnet zu bekommen, als er schuldet.
Lediglich bei öffentlichen Telefonen bei denen mit Bargeld gezahlt wird, kann der Benutzer seine Ausgaben wirklich kontrollieren, indem er nur eine bestimmte Geldmenge in das Gerät einwirft. Dieses Verfahren ist jedoch für Zahlungsverkehr bei E-Diensten in einer E-Commerce Umgebung nicht anwendbar über das Internet. Weiterhin wird das Vertrauen des Benutzers in den Diensteanbieter nicht so groß sein wie in dem oben geschilderten Fall, da er in der Regel kein Vertragsverhältnis zu denjenigen bestehendie ihre Dienste über das Internet anbieten.

Aufgabe der vorliegenden Erfindung ist es daher, für Benutzer einen Bezahlvorgang von E-Diensten und Digitalen Waren von der Erfindung folgendermaßen :
- der Benutzer soll die Kostenkontrolle behalten,
- wiederholtes Abbuchen soll ermölicht werden
- einfache und bequeme Benutzung
- flexible Einstellung der Ausgabengrenzen
- einfache Implementierung.

### Darstellung der Erfindung

Diese Aufgabe wird gelöst durch ein der Verfahren gemäß Anspruch 1 und 4 sowie einer Vorrichtung gemäß dem Anspruch 11.

Zur Beschreibung der Erfindung werden folgende Rollen vergeben:
- Dienstanbieter (Service Provider): er bietet einen E-Dienst an, wie Digitale "Waren" wie Musik, Informationen oder Spiele. Er hat Einnahmen aus dem Angebot an Diensten für den Benutzer.
- Zahlungsdienst-Anbieter (Payment Provider): bietet den Zahlungsdienst an. In der Regel ist der Benutzer als auch der Dienstanbieter bei ihm registriert. Zur Durchführung eines Zahlungsvorgangs wird dem Benutzer von seinem Konto der Geldbetrag abgezogen und dem Dienstanbieter der Geldbetrag auf dessen Konto gutgeschrieben.
- Benutzer (User): er benutzt einen Dienst des Dienstanbieters. Er zahlt für die benutzten Dienste über den Zahlungsdienst-Anbieter an den Dienstanbieter.

Folgende Nachrichten werden zwischen den 3 Parteien versendet:
- Berechnung der Gebühr (Charge Request/Confirm): Ein "Charge Request" ist eine Nachricht vom Dienstanbieter zum Zahlungsdienst-Anbieter, mittels der eine bestimmte Summe vom Benutzerkonto abgezogen und dem Dienstanbieterkonto gutgeschrieben werden soll. Die Anforderung wird dem Dienstanbieter zurück bestätigt mittels eines "Charge Confirm".
- Zahlungsvorgang (Payment Request/Confirm): Ein "Payment Request" ist eine Nachricht gesendet vom Zahlungsdienst-Anbieter zu einem Benutzer, mittels der eine Geldsumme zur Bezahlung eines Dienstes verlangt wird. Der Benutzer akzeptiert die Bezahlung mit einer "Payment Confirm" Nachricht.

Der Benutzer bekommt eine Zahlungsaufforderung bevor er einen Dienst eines Dienstanbieters benutzen kann bzw. Um einen Dienst weiter zu nutzen. Er wird deshalb aufgefordert, über den Zahlungsdienst-Anbieter einen Zahlungsvorgang zu bestätigen oder zu authorisieren, bevor er den gewünschten Dienst verwenden darf. Die Zahlung wird ausgelöst durch den Dienstanbieter durch das Senden eines "Charge Request" zum Zahlungsdienst-Anbieter.

Im Falle von wiederholter Vergebührung wird der Benutzer während der Benutzung mehrfach zur Zahlung aufgefordert (beispielsweise alle 10 Sekunden während dem Herunterladen von MP3 Daten). diese nachträglichen " Charge Request" werden ebenfalls vom Dienstanbieter ausgelöst, indem er an den Zahlungsdienstanbieter "Charge Requests" Nachrichten absetzt. Der Benutzer jedoch möchte nicht jeden dieser Zahlungsaufforderungen (Charge Request) bestätigen oder authorisieren, er möchte aber andererseits die Ausgaben für diesen Dienst begrenzen und kontrollieren können.
Wenn der Benutzer nun einen Dienst benutzen will, wird er mit einem "Payment Request" benachrichtigt über die anfängliche Gebühr, des Dienstes. Dies können beispielsweise 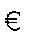 0.10 für 30 Sekunden MP3 Musik sein, was z. B. gleichzeitig das Minimum darstellen könnte, daß der Dienstanbieter für den Dienst berechnet. Der Benutzer kann diesen Betrag akzeptieren und würde in diesem Fall nach 30 Sekunden wieder gefragt werden, ob er den nächsten Zahlvorgang akzeptiert. Dieses Vorgehen ist jedoch nicht besonders benutzerfreundlich.

Die Erfindung schlägt nun folgendes verbessertes Verfahren vor:
Der Benutzer hat die Möglichkeit, sowohl die anfängliche Gebühr zu akzeptieren und gleichzeitig einen höheren Betrag für diesen Dienst. Beispielsweise kann der Benuzter eine Zahlung von bis zu 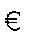 2,00 akzeptieren, obwohl der Dienst zunächst nur eine Gebühr von 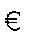 0.10 anfordert.
Dem Benutzer werden am Anfang jedoch dennoch nur 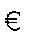 0.10 berechnet, er hat dann noch einen Dienstspezifischen zuvor bestätigtes Guthaben auf seinem Konto von 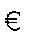 1.90. Wenn der Zahlungsdienst den nächsten "Charge Request" vom Dienstanbieter erhält, weiß dieser, daß der Benutzer die Summe bereits vorbestätigt hat. Reicht das dienstspezifische Guthaben aus, wird der Zahlungsdienst-Anbieter das Konto des Benutzers mit der Summe belasten, ohne nach Bestätigung oder Authorisation durch den Benutzer zu fragen. Nur in dem Fall, daß die vorbestätigte Geldmenge nicht ausreichend ist, wird der Benutzer wieder gefragt, ob er bereit ist, die Zahlung zu bestätigen.

Für jede Zahlungsanfrage, die der Benutzer erhält, ist es dem Benutzer möglich, neu über die Höhe der vorbestätigten Summe zu entscheiden. Er kann entweder genau die vom Dienstanbieter geforderte Summe bestätigen, oder auch einen höheren Betrag. Typischerweise wird ein vielfaches des angeforderten Betrages sinnvoll sein. Bestätigt er einen geringeren Betrag (beispielsweise 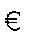 0) wird der Dienstanbieter für den Benutzer die Benutzung seines Dienstes abbrechen oder nur eine eingeschränkte Nutzung zulassen.

Wenn der Benutzer einen höheren Betrag als den verlangten akzeptiert, kann der überschüssige Teil der akzeptierten Summe vom Zahlungsdienst für diesen Dienst reserviert werden. In diesem Fall ist dem Benutzer garantiert, daß ausreichend Geld für die Benutzung des Dienstes vorhanden ist. Falls diese Summe bestätigt aber nicht reserviert ist, gibt das Vorgehen dem Benutzer eine bequeme Ausgabenkontrolle indem er eine Grenze setzen kann. In diesem Fall kann jedoch ein "Charge Request" des Dienstanbieters abgelehnt werden, wenn das Konto des Benutzers keine ausreichende Deckung bietet, z.B. weil zugleich andere zahlungspflichtige Dienst genutzt werden.

Wenn der Benutzer die Nutzung des Dienstes beendet, sollte der Dienstanbieter dieses dem Zahlungsdienst-Anbieter kommunizieren, so daß dieser die vorab bestätigte Summe wieder freigibt. Zusätzlich kann der Zahlungsdienst-Anbieter eine Zeitüberwachung aufweisen, die nach einem bestimmten Zeitintervall ohne Kontenbewegungen den vorabbestätigten oder reservierten Geldbetrag freigibt. Wenn der Zahlungsdienst-Anbieter einen unerwarteten (weil zu späten) "Charge Request" für diesen Dienst erhält, nachdem der vorab bestätigte Geldbetrag wieder freigegeben wurde, muß der Benutzer diesen Geldbetrag erneut bestätigten.

Vorteile:
- Das Verfahren ermöglicht es den Dienstanbietern ein kontinuierliches Vergebühren (z.B. basierend auf Zeit oder Volumen) zu benutzen, ohne die Notwendigkeit für den Benutzer, jede Anfrage separat zu bestätigen.
- Abhängig von der Zahlungspolitik des Zahlungsdienst-Anbieters oder im Benutzer-Profil kann dieser entweder aufgefordert werden, die Zahlung mittels eines Passwortes zu authorisieren (PIN; Private Identification Number) oder einfach nur mittels eines "OK".
- Der Benutzer hat eine hohe Flexibilität, da er den vorab bestätigten Geldbetrag jeweils neu festlegen kann.
- So wird eine Kostenkontrolle für den Benutzer eingeführt, erst wenn die festgelegte Schranke überschritten ist, wird der Benutzer erneut zur Bestätigung aufgefordert.
- Nur der Benutzer selber und der Zahlungsdienst-Anbieter sehen die Vorabbestätigung der höheren Summe, nicht jedoch der Dienstanbieter. So kann der Dienstanbieter nicht überprüfen, welche Summe der Benutzer bereit ist, für den ausgewählten Dienst auszugeben. In diesem Fall ist es sinnvoll, wenn der Zahlungsdienst-Anbieter "zwischen" dem Benutzer und dem Dienstanbieter angeordnet ist. Dieses hat jedoch keine Auswirkungen auf die Realisierung.
- In dem Fall, daß das Verfahren nur verwendet wird, um die Anzahl der Abfragen an den Benutzer zu reduzieren, ist keine Reservierung der Summe erforderlich. Ist dieser vorab bestätigter Betrag größer Null zu dem Zeitpunkt, wo der Benutzer die Verwendung des Dienstes beendet, kann der Zahlungsdienst-Anbieter einfach die verbliebene vorab bestätigte Summe löschen. Dieses ist nicht zeitkritisch und kann auch durch einen "Inactivity-Timer" gelöst werden. (also keine Kontenbewegungen mehr seit einer bestimmten Zeit.)
- Im anderen Fall, wenn die Vorabbestätigung auch die Bereitstellung einer ausreichenden Geldsumme für die Benutzung des Dienstes erreichen soll, wird der Zahlungsdienst-Anbieter das Geld für diesen Zweck reservieren. Dann ist es entscheidend, daß der verbleibende Restbetrag sofort nach Ende der Benutzung freigegeben wird.
- Obwohl das Verfahren für Micro-Payments in einer E-commerce und M-commerce environment entwickelt wurde, sind andere Anwendungsgebiete denkbar.
- Das Verfahren ist für den Zahlungsdienst-Anbieter einfach zu implementieren.
- Die Bedienungsoberfläche für den Benutzer kann sehr einfach gehalten werden.
- Der Benutzer kann in einer einfachen und flexiblen Weise eine Zahlungsbegrenzung setzen. Die Höhe kann verändert werden, bei jeder neuen Aufforderung zur Bestätigung.
- Der Dienstanbieter und der Zahlungsdienst-Anbieter können voneinander unabhängige Organisationen sein.

### Beschreibung der Zeichungen

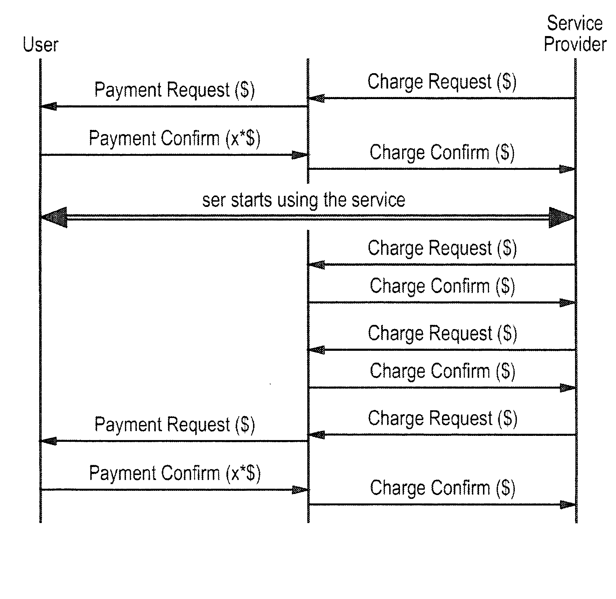

Die Figur 1 zeigt ein Ablaufdiagramm für das "Pre-Confirming" eines Geldbetrages für E-Commerce. Die einzelnen, neu eingeführten Befehle sowie der Ablauf im Einzelnen wurden bereits weiter oben erläutert.

## Patentansprüche

1. Verfahren für den Zahlungsverkehr über Mobilfunk- oder Datennetze bei dem
- Abbuchungsbeträge ($) für die Benutzung eines Dienstes von dem Benutzer bestätigt (Payment Request($), Payment Confirm($)) werden müssen und
- wiederholt erste Geldeinheiten (Charge Request ($)) vom Konto eines Dienstbenutzers auf ein Konto eines Dienstanbieters übertragen werden
**dadurch gekennzeichnet, daß**
- der Benutzer eine zweite Geldeinheit (Payment Confirm (x*$)) vorab genehmigt und
- die wiederholte Abbuchung der ersten Geldeinheit (Charge Request ($)) ohne weitere Genehmigungsanfrage (Payment Request) an den Benutzer durchgeführt wird (Charge Confirm($)), solange dies durch die vorab bestätigte zweite Geldeinheit auf dem Konto abgedeckt ist.

2. Verfahren nach Patentanspruch 1,
**dadurch gekennzeichnet, dass**
die zweite Geldeinheit für die Benutzung eines bestimmten Dienstes reserviert ist und somit dem Benutzer eine entsprechende Benutzungsdauer dieses Dienstes garantiert ist.

3. Verfahren nach Patentanspruch 2,
**dadurch gekennzeichnet, dass**
nach Beendung der Benutzung des Dienstes der verbleibende Rest der zweiten Geldeinheit für die Abbuchung von anderen Diensten freigegeben wird.

4. Verfahren nach einem der vorherigen Patentansprüche,
**dadurch gekennzeichnet, daß**
die Benutzung abgebrochen wird, wenn die Höhe des verbleibenden Restes der vorab bestätigten zweiten Geldeinheit niedriger ist als die Höhe der nächsten vom Konto des Benutzers abzubuchende erste Geldeinheit.

5. Verfahren nach einem der Patentansprüche 1 bis 3,
**dadurch gekennzeichnet, daß**
die Benutzung des Dienstes nur in eingeschränktem Umfang zugelassen wird, wenn die Höhe des verbleibenden Restes der vorab bestätigten zweiten Geldeinheit niedriger ist als die Höhe der nächsten vom Konto des Benutzers abzubuchende erste Geldeinheit.

6. Verfahren für den Zahlungsverkehr über Mobilfunk- oder Datennetze,
- ein Benutzer (User) einen Dienst eines Diensteanbieters (Service Provider) in Anspruch nehmen will, und
- für diesen Dienst dem Benutzer in bestimmten Zeitabständen wiederholt Benutzungsgebühren berechnet werden, und
- der Diensteanbieter eine erste Zahlungsaufforderung (Payment Request) an den Benutzer für diesen Dienst sendet,
**dadurch gekennzeichnet, daß**
der Benutzer dem Zahlungsdienst-Anbieter in seiner Zahlungsbestätigung (Payment Confirm) eine vorab für die Benutzung des Dienstes bestätigte Geldeinheit (x*$) mitteilt.

7. Verfahren nach Anspruch 6, **dadurch gekennzeichnet, daß**
- der Zahlungsverkehr mittels eines Zahlungsdienst-Anbieters (Payment Provider) durchgeführt wird, und
- der Benutzer (User) bei diesem Zahlungsdienst-Anbieter registriert ist, und
- der Diensteanbieter (Service Provider) bei diesem Zahlungsdienst-Anbieter registriert ist, und
- der Dienstanbieter eine erste Zahlungsaufforderung für die Benutzung eines Dienstes (Charge Request) an den Zahlungsdienst-Anbieter sendet, und
- dieser eine zweite Zahlungsaufforderung (Payment Request) an den Benutzer sendet.

8. Verfahren nach Anspruch 6 oder 7, **dadurch gekennzeichnet, daß** eine weitere Zahlungsaufforderung (Charge Request) nicht zum Benutzer weitergeleitet wird, sofern die von ihm mitgeteilte (X*$) Gebührensumme ausreichend für eine Abbuchung ist.

9. Verfahren nach einem der vorherigen Ansprüche, **dadurch gekennzeichnet, daß**
der mitgeteilte (X*$) Geldbetrag freigegeben wird, wenn über einen bestimmten Zeitraum keine weiteren Abbuchungen der ersten Geldeinheit erfolgen.

10. Verfahren nach einem der vorherigen Ansprüche, **dadurch gekennzeichnet, daß** die Zahlungsbestätigung des Benutzers die Eingabe einer PIN oder eines geeigneten Passwortes beinhaltet.

11. Vorrichtung zur Durchführung des Verfahrens nach einem der Patentansprüche 1 bis 10.
